Europäisches Patentamt

European Patent Office

Office européen des brevets

(19)

(11) Veröffentlichungsnummer: **0 003 065**
**B1**

# (12) EUROPÄISCHE PATENTSCHRIFT

(45) Veröffentlichungstag der Patentschrift:
02.09.81

(21) Anmeldenummer: 78200366.9

(22) Anmeldetag: 14.12.78

(51) Int. Cl.³: **C 01 D 3/08**

(54) **Verfahren zur Gewinnung von Kaliumchlorid.**

(30) Priorität: 16.01.78 DE 2801705

(43) Veröffentlichungstag der Anmeldung:
25.07.79 Patentblatt 79/15

(45) Bekanntmachung des Hinweises auf die Patenterteilung:
02.09.81 Patentblatt 81/35

(84) Benannte Vertragsstaaten:
BE CH DE FR GB IT LU NL SE

(56) Entgegenhaltungen:
DE-A-1 567 985
DE-B-1 226 090
DE-C-374 017
DE-C-1 064 044

(73) Patentinhaber: METALLGESELLSCHAFT AG,
Reuterweg 14 Postfach 3724, D-6000 Frankfurt/M.1 (DE)

(72) Erfinder: Ertl, Dietrich, Dr., Parkstrasse 10,
D-6240 Königstein (DE)
Erfinder: Ueberle, Dieter, Letzter Hasenpfad 13,
D-6000 Frankfurt am Main 70 (DE)

(74) Vertreter: Fischer, Ernst, Dr., Reuterweg 14,
D-6000 Frankfurt am Main 1 (DE)

## Verfahren zur Gewinnung von Kaliumchlorid

Die Erfindung betrifft ein Verfahren zur Gewinnung von Kaliumchlorid aus Sylvinit oder sylvinitähnlichen Ausgangsstoffen durch Heißverlösen der Ausgangsstoffe mit Mutterlauge der Kristallisationsstufe, Abtrennen des im wesentlichen aus Natriumchlorid bestehenden Rückstandes, Zugabe von Kaliumchlorid bis praktisch zur Sättigung und Kristallisation von Kaliumchlorid durch Kühlung der Lösung.

Es ist bekannt, zur Trennung der die Hauptkomponenten des Sylvinits bildenden Chloride von Kalium und Natrium das unterschiedliche Löslichkeitsverhalten von Natriumchlorid und Kaliumchlorid bei unterschiedlichen Temperaturniveaus auszunutzen. Während sich die Löslichkeit des Natriumchlorids im System Kaliumchlorid/Natriumchlorid/Wasser im technisch interessanten Arbeitsbereich von etwa 20 bis 110°C nur unwesentlich ändert, steigt die Löslichkeit von Kaliumchlorid bei Temperatursteigerung innerhalb der genannten Grenzen auf mehr als das Doppelte. Daher ist es üblich, Sylvinit mit wiederaufgeheizter Mutterlauge der Kristallisationsstufe zu verlösen, wobei im wesentlichen Kaliumchlorid gelöst wird und Natriumchlorid im Rückstand bleibt, die so gewonnene Lauge von im Sylvinit praktisch stets vorhandenen wasserunlöslichen Bestandteilen zu befreien, die gewonnene Lösung zwecks Kristallisation von Kaliumchlorid zu kühlen und die Lösung nach erneutem Aufheizen in den Prozeß des Heißverlösens zurückzuführen (vgl. Ullmann's Enzyklopädie der Techn. Chemie, 3. Auflage, 1957, Band 9, Seite 185 ff).

Um eine möglichst vollständige Kaliumchloridentfernung zu erzielen, wird bei einer Variante des üblichen Gleichstromlösens zunächst in einem Hauptlöser mit Löselauge die Hauptmenge Kaliumchlorid und in einem Nachlöser mit ebenfalls frischer Löselauge restliches Kaliumchlorid entfernt, wobei die zuletzt erhaltene Lauge in den Hauptlöser zur weiteren Aufstärkung geführt wird (vgl. l. c. Seite 189).

Obgleich das skizzierte Verfahren eine weite Verbreitung gefunden hat, ist nachteilig, daß mit der Abtrennung der wasserunlöslichen Schlämme, denen eine beträchtliche Laugenmenge anhaftet, erhebliche Kaliumchloridverluste verbunden sind, die entweder hingenommen oder aber durch aufwendige Lösebehandlungen reduziert werden müssen. Ein weiterer Nachteil ist, daß Schlammeindickung und gegebenenfalls Lösebehandlung bei Temperaturen, bei denen die Laugen stark korrosiv sind und daher bestimmte Materialien für die Behandlungsapparate erfordern, durchzuführen sind.

Schließlich ist es aus der DE-A 15 67 985 bekannt, zwecks Herstellung von hochprozentigem und grobkörnigem Kaliumchlorid die im Löseprozeß entstehende heiße Lösung durch Zugabe von z. B. Kaliumchlorid daran aufzusättigen, das dabei gleichzeitig ausfallende Natriumchlorid zu entfernen und die Lösung vor ihrer Kristallisation mit bestimmten Wassermengen zu versetzen. Hierdurch wird zwar das mit dem Verfahren bezweckte Ziel erreicht, das vorstehend angesprochene Problem der Entfernung der wasserunlöslichen Schlämme ist jedoch nicht behandelt.

Aufgabe der Erfindung ist, ein Verfahren bereitzustellen, das die bekannten, insbesondere vorgenannten Nachteile, zu beseitigen vermag und das dennoch nicht mit einem wesentlichen zusätzlichen apparativen Aufwand verbunden ist.

Die Aufgabe wird gelöst, indem das Verfahren der eingangs genannten Art entsprechend der Erfindung derart ausgestaltet wird, daß man

a) die grob aufgemahlenen Ausgangsstoffe feinmahlt;

b) die feingemahlenen Ausgangsstoffe bei Umgebungstemperatur mit einer Natriumchlorid- und Kaliumchlorid-gesättigten Lösung anmaischt und wasserunlösliche Verunreinigungen mit der Lösung ausschwemmt;

c) die Lösung von den wasserunlöslichen Verunreinigungen trennt und mindestens teilweise zur Herstellung der Maische in Stufe (b) rückführt;

d) den von wasserunlöslichen Verunreinigungen weitgehend befreiten, im wesentlichen Kaliumchlorid und Natriumchlorid enthaltenden Salzbrei gemäß (b) mit einer an Natriumchlorid und Kaliumchlorid gesättigten, aus der Kristallisationsstufe stammenden Lösung derart in Kontakt bringt, daß eine Suspension einer Temperatur von mindestens 95°C entsteht und

e) die vom überwiegend Natriumchlorid enthaltenden Rückstand abgetrennte, an Kaliumchlorid aufgestärkte und durch Zugabe von Kaliumchlorid praktisch gesättigte Lösung zur Kristallisation bringt.

Unter sylvinitähnlichen Ausgangsstoffen im Sinne der vorliegenden Erfindung sind solche verstanden, die ihrer chemischen Zusammensetzung nach sylvinitähnlich sind, überwiegend Kaliumchlorid und Natriumchlorid enthalten und höchstens unbedeutende Mengen Sulfat aufweisen.

Die innerhalb des erfindungsgemäßen Verfahrens vorgesehene Feinaufmahlung, vorzugsweise derart, daß 90% des Mahlgutes eine Korngröße unter 1,0 mm besitzt, bewirkt, daß die wasserunlöslichen Verunreinigungen praktisch vollständig freigelegt und in der nachfolgenden Stufe aus dem Natriumchlorid und Kaliumchlorid enthaltenden Rückstand ausgeschwemmt werden können. Ein weiterer Vorteil der Feinaufmahlung liegt in der schnelleren Auflösung des Kaliumchlorids in der Stufe des Lösens mit heißer, aus der Kristallisationsstufe rückgeführter Mutterlauge. Die Verweilzeit in der Lösestufe kann mithin reduziert werden, was wiederum mit einer Verringerung der Reaktorabmessungen bei vorgegebenem Durchsatz oder aber mit einer Erhöhung des Durchsatzes bei gegebenen Reaktorabmessungen verbunden ist.

Eine besonders vorteilhafte Ausführungsform der Feinaufmahlung ist die Naßvermahlung, die in Gegenwart einer im Verhältnis Feststoff zu Lösung wie 1 : (1,5 bis 2,5) zugesetzten Natriumchlorid- und Kaliumchlorid-gesättigten Lösung vorgenommen wird. Diese Arbeitsweise gewährleistet, daß die Entstehung von Feinanteilen mit Partikelgrößen kleiner 0,06 mm, die in der nachfolgenden Trennstufe von den gröberen Anteilen separiert werden, in vertretbaren Grenzen gehalten wird und im wesentlichen auf die wasserunlöslichen Verunreinigungen beschränkt bleibt.

In der nachfolgenden Stufe wird der feingemahlene Ausgangsstoff mit einer bei Umgebungstemperaturen mit Natriumchlorid und Kaliumchlorid gesättigten Lösung angemaischt. Vorzugsweise wird die Anmaischung in der Weise vorgenommen, daß pro Gewichtsteil Ausgangsstoff 4 bis 6 Gewichtsteile Lösung eingesetzt werden. Bei der Einstellung auf das Gewichtsverhältnis von 1 : (4 bis 6) ist die bei der eventuell vorgenommenen Naßvermahlung zugesetzte Laugenmenge mit zu berücksichtigen. Die Maische wird dann einer Trennvorrichtung, vorzugsweise einem Hydrozyklon, zugeführt, in der primär mit Hilfe der Anmaischlauge die wasserunlöslichen Verunreinigungen vom Kristallbrei abgetrennt werden. Die die wasserunlöslichen Verunreinigungen aufweisende Lauge wird eingedickt, vom Schlamm befreit und mindestens teilweise, im allgemeinen vollständig zur Anmaischung und gegebenenfalls Naßvermahlung zurückgeführt.

Der aus der Trennvorrichtung austretende Kristallbrei gelangt, zweckmäßigerweise nach vorheriger Filtration, in die Stufe der Heißverlösung, in der er mit aus der Kristallisationsstufe rückgeführter und zuvor aufgeheizter Mutterlauge in Kontakt gebracht wird. Hierzu kann die Temperatur der Mutterlauge zuvor so weit erhöht werden, daß die Temperatur bereits mindestens 95°C erlangt (Mischtemperatur); es kann aber auch erst durch zusätzliche Beheizung, z. B. durch Dampfeintrag, die geforderte Endtemperatur eingestellt werden. Nach ausreichendem Kontakt wird die Lauge vom Ungelösten, im wesentlichen Natriumchlorid getrennt. Der Rückstand wird zweckmäßigerweise zwecks Abtrennung noch geringer Kaliumchloridreste nochmals gelaugt. Hierzu kann ein aufgeheizter Teilstrom von Mutterlauge aus der Kristallisation verwendet werden, wobei dieser Teilstrom anschließend der Hauptlösestufe zugeführt wird. Besonders zweckmäßig ist es jedoch, zum Nachverlösen die aus der Kristallisationsstufe rückgeführte Mutterlauge, die nur geringfügig, vorzugsweise bis maximal 50°C, aufgewärmt wird, zu verwenden. Anschließend gelangt diese Lösung zweckmäßigerweise nach weiterer Aufheizung in die Stufe des Heißverlösens.

Die in der Hauptverlösestufe anfallende und filtrierte, an Kaliumchlorid aufgestärkte Lösung wird anschließend durch Zugabe von Kaliumchlorid praktisch gesättigt. Hierzu kann das Kaliumchlorid in fester Form oder in Form einer praktisch gesättigten Lösung mit Wasser zugeführt werden. Es ist zu berücksichtigen, daß die Sättigungskonzentration von Kaliumchlorid in Wasser beträchtlich höher ist als in Natriumchlorid-gesättigtem Wasser, so daß auch bei Eintrag des Kaliumchlorids in Form einer wäßrigen Lösung eine Aufkonzentration an Kaliumchlorid im System Kaliumchlorid/Natriumchlorid/Wasser auftritt.

Als Quelle für Kaliumchlorid wird üblicherweise Kaliumchlorid der eigenen Produktion verwendet. Besonders vorteilhaft ist es hierbei, zur praktischen Sättigung der Lösung feinkörniges Kaliumchlorid einzusetzen, das während der Kristallisation selbst oder in der nachgeschalteten Trocknungsstufe anfällt.

Nach der Herstellung der praktisch Kaliumchlorid-gesättigten Lösung wird diese der Kristallisation, zweckmäßigerweise in mehreren Stufen unter jeweils vermindertem Druck, unterworfen. Die bei der Kristallisation anfallenden feinen Kaliumchloridkristalle können, je nach Beschaffenheit der verwendeten Kristallisatoren, diesen in Form einer Dispersion entnommen und abgetrennt werden. Es ist jedoch auch möglich, Feinkristalle erst nach der üblichen Trocknung durch Sieben abzutrennen.

Durch geeignete Wahl der Laugungskreisläufe, des Wasserzusatzes etc. ist es möglich, in einer vorteilhaften Ausgestaltung der Erfindung den Magnesiumchloridgehalt in den Laugelösungen auf eine Konzentration zwischen 10 und 45 g/l einzustellen. Hierdurch gelingt es, praktisch das gesamte mit den Ausgangsstoffen vorlaufende Magnesiumchlorid mit den wasserunlöslichen Verunreinigungen und dem Kochsalz auszutragen.

Die herausragenden Vorteile des erfindungsgemäßen Verfahrens sind folgende:

Die Abtrennung der wasserunlöslichen Verunreinigungen erfolgt bei Umgebungstemperatur. Demzufolge werden die vorhandenen Werkstoffprobleme erheblich reduziert. Außerdem sind aufgrund der vergleichsweise geringen Konzentration bei Umgebungstemperatur die Kaliumchloridverluste, bedingt durch die den Verunreinigungen anhaftende Lauge, gering. Die einzelnen Verfahrensabschnitte sind hinsichtlich der Laugungsmittelkreisläufe getrennt, wodurch eine leichtere Prozeßsteuerung möglich ist und Veränderungen in einer Stufe des Prozesses nicht den gesamten Verfahrensablauf beeinflussen. Die hohe Kaliumchloridkonzentration der stark aufgeheizten, in die Kristallisationsstufe geführten Lösung begünstigt die Entstehung eines hohen Anteils grobkristallinen Kaliumchlorids.

Die bevorzugte Ausgestaltung der Erfindung mit Nachverlösen restlicher Kaliumchloridgehalte gewährleistet ein hohes Kaliumchloridausbringen und die Einstellung einer niedrigen Magnesiumchloridkonzentration hat maßgeblichen Einfluß auf die Gewinnung eines sehr reinen Produktes.

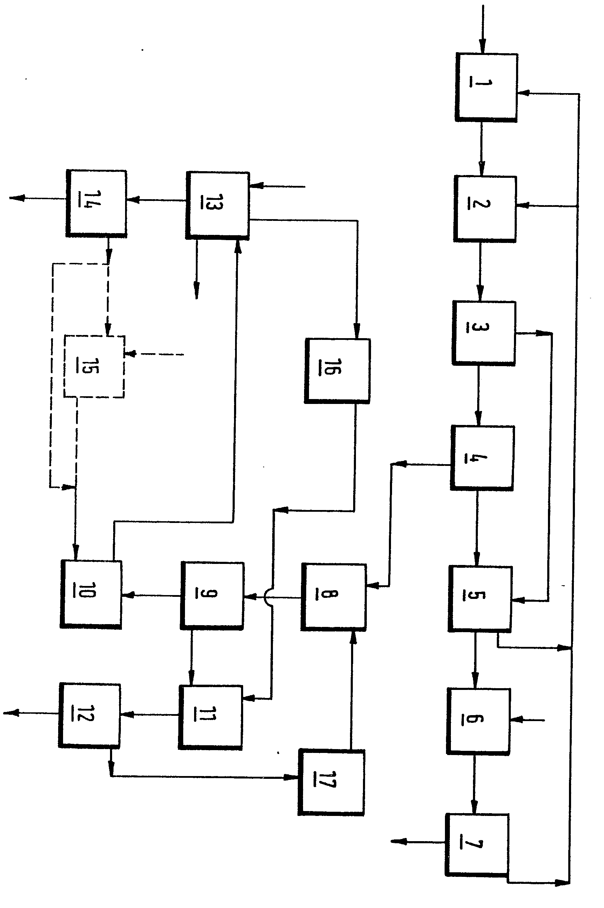

Die Erfindung wird anhand der Figur und des Ausführungsbeispiels näher und beispielsweise erläutert.

Die Figur stellt ein Fließschema des erfindungsgemäßen Verfahrens dar.

In der Naßmahlung 1 wird Sylvinit mit einer bei Umgebungstemperatur mit Natriumchlorid und Kaliumchlorid gesättigten Lösung vermahlen, anschließend mit einer ebenfalls an Kaliumchlorid und Natriumchlorid gesättigten Lösung im Anmaischbehälter 2 angemaischt und die so erhaltene Maische im Hydrozyklon 3 in eine Fraktion, die im wesentlichen die wasserunlöslichen Verunreinigungen aufweist, und in eine im wesentlichen Natrium- und Kaliumchloridkristalle enthaltende Fraktion getrennt. Die kristalline Fraktion wird auf dem Filter 4 von anhaftender Lauge befreit und abgeführt. Die vom Filter ablaufende Lauge gelangt zusammen mit den im Hydrozyklon 3 abgetrennten Verunreinigungen in einen Eindicker 5, in dem eine Auftrennung in die Verunreinigungen und eine an Natriumchlorid und Kaliumchlorid gesättigte Lösung erfolgt. Der Eindickerüberlauf gelangt in die Naßmahlung 1 bzw. in den Anmaischbehälter 2 zurück. Der Eindickerunterlauf wird in einem Restlöser 6 mit Wasser gewaschen und in einem weiteren nachgeschalteten Eindicker 7 von der wäßrigen Lösung getrennt. Aus dem Eindicker 7 werden die als Schlamm anfallenden Verunreinigungen ausgetragen. Die hier anfallende Lösung wird ebenfalls in die Naßmahlung 1 und in den Anmaischbehälter 2 zurückgeführt.

Die im Filter 4 anfallenden Kristalle gelangen in den Heißverlöser 8, in dem sie mit aufgeheizter, aus dem Kristallisator 13 stammender Lösung in Kontakt gebracht wird. Nach dem Vorgang des Heißverlösens gelangt die Laugekristallmischung auf ein Filter 9, in dem der im wesentlichen aus Natriumchlorid bestehende kristalline Rückstand abgetrennt wird. Der kristalline Rückstand gelangt zwecks Nachverlösens von verbliebenen Kaliumchloridmengen in den Nachverlöser 11, in dem er mit aus dem Kristallisator 13 stammender Mutterlauge behandelt wird. Anschließend erfolgt eine Abtrennung in der Vorrichtung 12, aus der einerseits Natriumchlorid, andererseits die mit den Restgehalten an Kaliumchlorid aufgestärkte Lösung austritt. Die Lösung wird in einem Aufheizer 17 auf hinreichend hohe Temperatur gebracht und in den Heißverlöser 8 eingetragen. Das im Filter 9 erhaltene Filtrat gelangt in den Aufsättiger 10, in den Kaliumchlorid in gelöster oder fester Form eingetragen wird. Die auf diese Weise praktisch gesättigte Kaliumchloridlösung gelangt dann in den Kristallisator 13, in dem durch Temperatursenkung, vorzugsweise durch Vakuumverdampfung, Kaliumchlorid auskristallisiert wird. Das Kaliumchlorid wird anschließend in Stufe 14 in eine Grob- und in eine Feinfraktion aufgeteilt. Die Feinfraktion gelangt über den Feinkornlöser 15, der entbehrlich sein kann, wenn die Feinkornverlösung unmittelbar im Aufsättiger 10 erfolgt, in den Prozeß zurück, während die Grobfraktion das fertige Verfahrensprodukt darstellt. Die im Kristallisator 13 anfallende Mutterlauge wird im Aufheizer 16 aufgeheizt und dann dem Nachverlöser 11 zugeführt.

### Beispiel

Zur Verarbeitung gelangt ein Sylvinit mit folgender Zusammensetzung:

| | |
|---|---|
| KCl | 28,00 bis 32,00 Gew.-% |
| NaCl | 60,02 bis 66,35 Gew.-% |
| CaSO$_4$ | 1,50 bis 2,50 Gew.-% |
| MgCl$_2$ | 0,25 bis 0,38 Gew.-% |
| Unlösliches | 3,50 bis 4,50 Gew.-% |
| Feuchtigkeit | 0,40 bis 0,60 Gew.-% |

530 kg *) Sylvinit werden in der Naßmahlung 1 in Gegenwart von 1020 kg aus hinteren Stufen rückgeführter Natriumchlorid- und Kaliumchlorid-gesättigter Lösung vermahlen. Das Kornspektrum des feingemahlenen Sylvinits beträgt

6 Gew.-% > 0,4 mm
10 Gew.-% zwischen 0,4 und 0,3 mm
14 Gew.-% zwischen 0,3 und 0,2 mm
23 Gew.-% zwischen 0,2 und 0,1 mm
36 Gew.-% zwischen 0,1 und 0,06 mm
11 Gew.-% < 0,06 mm

Im Anschluß an die Feinmahlung erfolgt im Anmaischbehälter 2 durch Zugabe von ebenfalls aus weiter hinten liegenden Stufen anfallender Natriumchlorid- und Kaliumchlorid-gesättigter Lösung in einer Menge von 1803 kg unter intensivem Rühren die Herstellung einer Maische, die im Hydrozyklon 3 in einen Kristallbrei und eine dünnflüssige im wesentlichen die wasserunlöslichen Verunreinigungen enthaltende Lösung aufgetrennt wird. Die die Verunreinigungen enthaltende Lösung fällt in einer Gesamtmenge von 2585 kg an und enthält 58 kg Feststoffe. Diese Lösung wird in den Eindicker 5 überführt.

Der bei der Zyklontrennung anfallende Kristallbrei besteht aus 461 kg Feststoff und 307 kg dem Feststoff anhaftender Lauge. Der Kristallbrei wird auf dem Filter 4 von weiterer Lauge befreit, die in Mengen von 210 kg (mit 10,9 kg Feststoff) in den Eindicker 5 geleitet wird. Im Eindicker 5 werden 2603 kg Lauge abgetrennt, die in die Naßmahlung 1 und den Anmaischbehälter 2 zurückgeführt werden. Der im Eindicker 5 anfallende Unterlauf fällt in Mengen von 191 kg

*) Die Mengenangaben im gesamten Beispiel beziehen sich auf stündlichen Durchsatz.

an und wird dem Restlöser 6 zugeleitet. Durch Zufuhr von 107 kg Wasser wird das restliche Kaliumchlorid aufgelöst. Die Suspension wird dann dem Eindicker 7 zugeleitet, in dem als Überlauf 219 kg Lauge anfallen, die wie die Lauge aus dem Eindicker 5 in die Naßvermahlung 1 und den Anmaischbehälter 2 zurückgeleitet werden. Im übrigen fallen 79 kg wasserunlösliche Verunreinigungen in Form eines Schlammes an, der folgende Zusammensetzung aufweist:

| | |
|---|---|
| KCl | 5,66 Gew.-% |
| NaCl | 12,12 Gew.-% |
| MgCl$_2$ | 0,44 Gew.-% |
| CaSO$_4$ | 11,43 Gew.-% |
| Unlösliches | 25,70 Gew.-% |
| Wasser | 44,65 Gew.-% |

Der auf dem Filter 4 in einer Menge von 558 kg gewonnene Kristallbrei besteht zu 450 kg aus Feststoff und zu 108 kg aus anhaftender Lauge. Er wird dem Heißverlöser 8 zugeleitet und dort mit 1706 kg zuvor im Aufheizer 17 auf 111°C aufgeheizter, aus dem Kristallisator 13 stammender Lösung behandelt. Zuvor hatte diese Lösung den Aufheizer 16, in dem sie auf 44°C aufgeheizt worden war, und den Nachverlöser 11, in dem sie bei einer Mischtemperatur von 45°C weitere 38 kg Kaliumchlorid aufgenommen hat, durchlaufen.

Im Heißverlöser 8 fällt eine Suspension in einer Menge von 2264 kg mit einer Mischtemperatur von 100°C an, die dem Filter 9 zugeleitet wird. Hier werden 418 kg kristalliner Rückstand abgetrennt und dem Nachverlöser 11 zugeleitet. Über den dem Nachverlöser nachgeschalteten Filter 12 werden 389 kg Kochsalz ausgetragen.

Die im Filter 9 anfallende Lösung, deren Menge 1846 kg ausmacht, gelangt in den Aufsättiger 10, wird dort unter Umgehung eines separaten Feinkornverlösers 15 mit 26 kg Kaliumchlorid versetzt und mittels 4 kg Dampf von ca. 3 Bar durch indirekte Beheizung auf einer Temperatur von 100°C gehalten. Die Sättigungskonzentration hinsichtlich Kaliumchlorid entspricht einer Temperatur von 95°C. Anschließend gelangt die Lösung in den Kristallisator 13, in dem in 7 Stufen unter jeweils vermindertem Druck eine Abkühlung auf 35°C bewirkt wird. Um den Ausfall von Kochsalz zu vermeiden, werden in den ersten Stufen des Kristallisators 13 118 kg Wasser zugesetzt. Im Kristallisator 13 werden 141 kg Wasser in Form von Brüden frei sowie 164 kg kristallines Kaliumchlorid gebildet. 26 kg werden in den Aufsättiger 10 zurückgeführt, 138 kg werden als Produktion ausgetragen.

Die Brüden aus den ersten 5 Stufen des Kristallisators 13 werden zur Aufwärmung der rückgeführten Mutterlauge im indirekten Wärmeaustausch verwendet.

Die Analyse des erhaltenen Kaliumchlorids ist:

98,13 Gew.-% KCl
1,57 Gew.-% NaCl
0,20 Gew.-% MgCl$_2$
0,03 Gew.-% CaSO$_4$
0,07 Gew.-% Unlösliches

## Patentansprüche

1. Verfahren zur Gewinnung von Kaliumchlorid aus Sylvinit oder sylvinitähnlichen Ausgangsstoffen durch Heißverlösen der Ausgangsstoffe mit Mutterlauge der Kristallisationsstufe, Abtrennen des im wesentlichen aus Natriumchlorid bestehenden Rückstandes, Zugabe von Kaliumchlorid bis praktisch zur Sättigung und Kristallisation von Kaliumchlorid durch Kühlung der Lösung, dadurch gekennzeichnet, daß man

a) die grob aufgemahlenen Ausgangsstoffe feinmahlt;
b) den feingemahlenen Ausgangsstoff bei Umgebungstemperatur mit einer Natriumchlorid- und Kaliumchlorid-gesättigten Lösung anmaischt und wasserunlösliche Verunreinigungen mit der Lösung ausschwemmt;
c) die Lösung von den wasserunlöslichen Verunreinigungen trennt und mindestens teilweise zur Herstellung der Maische in Stufe (b) rückführt;
d) den von den wasserunlöslichen Verunreinigungen weitgehend befreiten, im wesentlichen Kaliumchlorid und Natriumchlorid enthaltenden Salzbrei gemäß (b) mit einer an Natriumchlorid und Kaliumchlorid gesättigten, aus der Kristallisationsstufe stammenden Lösung derart in Kontakt bringt, daß eine Suspension einer Temperatur von mindestens 95°C entsteht und
e) die vom überwiegend Natriumchlorid enthaltenden Rückstand abgetrennte, an Kaliumchlorid aufgestärkte und durch Zugabe von Kaliumchlorid praktisch gesättigte Lösung zur Kristallisation bringt.

2. Verfahren nach Anspruch 1, dadurch gekennzeichnet, daß man die Feinmahlung gemäß Stufe (a) auf 90% kleiner 1,0 mm einstellt.
3. Verfahren nach Anspruch 1 oder 2, dadurch gekennzeichnet, daß man die Feinmahlung gemäß Stufe (a) in Gegenwart einer Natriumchlorid- und Kaliumchlorid-gesättigten Lösung, die im Verhältnis Feststoff zu Lösung wie 1 : (1,5 bis 2,5) zugesetzt wird, vornimmt.
4. Verfahren nach Anspruch 1, 2 oder 3, dadurch gekennzeichnet, daß man zur Herstellung der Maische in Stufe (b) ein Gewichtsverhältnis von Ausgangsstoff zu Lösung von 1 : (4 bis 6) einstellt.
5. Verfahren nach einem oder mehreren der Ansprüche 1 bis 4, dadurch gekennzeichnet, daß man die Verunreinigungen innerhalb der Stufe (b) mit Hilfe eines Hydrozyklons bei einem Trennschnitt von 0,06 mm ausschwemmt.
6. Verfahren nach einem oder mehreren der Ansprüche 1 bis 5, dadurch gekennzeichnet, daß man den Rückstand aus Stufe (d) durch Laugung, vorzugsweise unterhalb 50°C, von Kaliumchlorid-Restgehalten befreit.

7. Verfahren nach einem oder mehreren der Ansprüche 1 bis 6, dadurch gekennzeichnet, daß man in Stufe (e) die Lösung durch Zugabe von in der Kristallisationsstufe anfallendem, vorzugsweise feinkörnigem, Kaliumchlorid praktisch sättigt.

8. Verfahren nach einem oder mehreren der Ansprüche 1 bis 7, dadurch gekennzeichnet, daß man den Magnesiumchloridgehalt in den Laugelösungen auf eine Konzentration zwischen 10 und 45 g/l einstellt.

9. Verfahren nach einem oder mehreren der Ansprüche 1 bis 8, dadurch gekennzeichnet, daß man die Kristallisation in mehreren Stufen unter vermindertem Druck vornimmt.

## Claims

1. A process of recovering potassium chloride from sylvinite or sylvinitelike starting materials, in which the starting materials are leached with hot mother liquor from a crystallizing stage, the residue consisting substantially of sodium chloride is separated, the separated solution is virtually saturated by an addition of potassium chloride, and the solution is cooled to crystallize potassium chloride, characterized in that

a) the coarsely ground starting materials are finely ground;

b) the finely ground starting materials are pulped at ambient temperatures with a solution which is saturated with sodium chloride and potassium chloride, and water-insoluble impurities are separated with the solution;

c) the solution is separated from the water-insoluble impurities and is recycled at least in part to produce the pulp in step b);

d) the moist salt mass which has been obtained in step b) and consists substantially of potassium chloride and sodium chloride and from which water-insoluble impurities have been removed to a high degree is contacted with a solution which comes from the crystallizing stage and is saturated with sodium chloride and potassium chloride, said contacting step being carried out so that a suspension at a temperature of at least 95°C ist obtained;

e) the solution which is separated from the residue, containing mainly sodium chloride, and has been virtually saturated by an addition of potassium chloride is crystallized.

2. A process according to claim 1, characterized in that the starting materials are finely ground in step a) so that 90% have a particle size below 1.0 mm.

3. A process according to claim 1 or 2, characterized in that the starting materials are finely ground in step a) in the presence of a solution which is saturated with sodium chloride and potassium chloride and which is added at a weight ratio of 1 : 1.5 to 1 : 2.5 of solids to solution.

4. A process according to claim 1, 2 or 3, characterized in that a weight ratio of 1 : 4 to 1 : 6 of starting material to solution is used for pulping in step b).

5. A process according to any of claims 1 to 4, characterized in that the impurities are separated in step b) as overflow in a hydrocyclone operated at a parting size of 0.06 mm.

6. A process according to any of claims 1 to 5, characterized in that the residue obtained in step d) is leached, preferably below 50°C, to remove residual potassium chloride.

7. A process according to any of claims 1 to 6, characterized in that the solution is virtually saturated with potassium chloride in step e) by an addition of preferably fine-grained potassium chloride which has become available in the crystallizing step.

8. A process according to any of claims 1 to 7, characterized in that the solutions used for leaching are controlled to contain magnesium chloride in a concentration of 10 to 45 grams per liter.

9. A process according to any of claims 1 to 8, characterized in that the crystallization is effected in a plurality of stages under a decreasing pressure.

## Revendications

1. Procédé pour la production de chlorure de potassium à partir de sylvinite ou de matières premières semblables à la sylvinite par dissolution à chaud des matières premières au moyen d'eau mère de l'étape de cristallisation, séparation du résidu constitué essentiellement de chlorure de sodium, addition de chlorure de potassium jusqu'à quasi saturation et cristallisation de chlorure de potassium par refroidissement de la solution, caractérisé en ce que

a) les matières premières grossièrement broyées sont moulues finement;

b) la matière première finement moulue est mélangée à température ambiante avec une solution saturée en chlorure de sodium et en chlorure de potassium et les impuretés insolubles dans l'eau sont évacuées par élutriation avec la solution;

c) la solution est séparée des impuretés insolubles dans l'eau et renvoyée au moins partiellement à l'étape (b) pour la préparation du mélange;

d) la pâte saline débarrassée en grande partie des impuretés insolubles dans l'eau et contenant principalement du chlorure de potassium et du chlorure de sodium telle qu'obtenue à l'étape (b) est mise en contact avec une solution saturée en chlorure de sodium et en chlorure de potassium provenant de cristallisation, de manière à former une suspension dont la température est d'au moins 95°C, et

e) la solution, séparée du résidu contenant principalement du chlorure de sodium, enrichie en chlorure de potassium et pratiquement saturée par addition de chlorure de potassium est amenée cristallisation.

2. Procédé selon la revendication 1, caractérisé en ce que la mouture fine selon l'étape (a) est réglée pour que 90% du produit possèdent une dimension de particule inférieure à 1 mm.

3. Procédé selon les revendications 1 ou 2, caractérisé en ce que la mouture fine selon l'étape (a) s'effectue en présence d'une solution saturée en chlorure de sodium et en chlorure de potassium ajoutée en quantité telle que le rapport matière solide/solution soit de l'ordre de 1 : (1,5 à 2,5).

4. Procédé selon l'une quelconque des revendications 1 à 3, caractérisé en ce que pour la préparation du mélange selon l'étape (b), le rapport en poids matière première/solution est réglé à 1 : (4 à 6).

5. Procédé selon l'une quelconque des revendications 1 à 4, caractérisé en ce que dans le cadre de l'étape (b), les impuretés sont évacuées par élutriation à l'aide d'un hydrocyclone, la limite de séparation étant de 0,06 mm.

6. Procédé selon l'une quelconque des revendications 1 à 5, caractérisé en ce que le résidu de l'étape (d) est débarrassé des teneurs résiduaires en chlorure de potassium par lixiviation, de préférence à moins de 50°C.

7. Procédé selon l'une quelconque des revendications 1 à 6, caractérisé en ce que dans l'étape (e), la solution est pratiquement saturée par addition de chlorure de potassium de préférence en grains fins produit au cours de l'étape de cristallisation.

8. Procédé selon l'une quelconque des revendications 1 à 7, caractérisé en ce que la teneur en chlorure de magnésium dans les solutions de lixiviation est maintenue à une concentration comprise entre 10 et 45 g/l.

9. Procédé selon l'une quelconque des revendications 1 à 8, caractérisé en ce que la cristallisation s'effectue en plusieurs paliers sous pression réduite.